(19) Europäisches Patentamt
European Patent Office
Office européen des brevets

(11) EP 1 765 731 B1

(12) **EUROPEAN PATENT SPECIFICATION**

(45) Date of publication and mention of the grant of the patent:
**14.08.2013 Bulletin 2013/33**

(21) Application number: **05766103.5**

(22) Date of filing: **15.06.2005**

(51) Int Cl.:
***C01B 33/141*** *(2006.01)*

(86) International application number:
**PCT/US2005/021156**

(87) International publication number:
**WO 2006/002085 (05.01.2006 Gazette 2006/01)**

(54) **CHEMICALLY ASSISTED MILLING OF SILICAS**

CHEMISCH UNTERSTÜTZES MAHLEN VON SILICIUMDIOXIDEN

BROYAGE CHIMIQUEMENT ASSISTE DE SILICES

(84) Designated Contracting States:
**AT BE BG CH CY CZ DE DK EE ES FI FR GB GR HU IE IS IT LI LT LU MC NL PL PT RO SE SI SK TR**

(30) Priority: **15.06.2004 US 579694 P**

(43) Date of publication of application:
**28.03.2007 Bulletin 2007/13**

(73) Proprietor: **W. R. Grace & Co.-Conn
Columbia, MD 21044-4098 (US)**

(72) Inventor: **CHAPMAN, David Monroe
Ellicott City, Maryland 21042 (US)**

(74) Representative: **UEXKÜLL & STOLBERG
Patentanwälte
Beselerstrasse 4
22607 Hamburg (DE)**

(56) References cited:
**WO-A-00/02814**
**US-A1- 2003 066 459**
**US-B1- 6 380 265**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 765 731 B1

**Description**

BACKGROUND OF THE INVENTION

This invention relates to stable dispersions of porous surface modified anionic silica particles having a high solids content. The invention also relates to methods of making these dispersions.

Fine sized inorganic oxide particles are well known. For example, "colloidal silicas" are well known and typically have median particle sizes (diameters) of 0.1 microns (100 nanometers) or less. See, for example, Canadian Patents 609,186 and 609,190; and U.S. Patent 3,012,973. Colloidal silica in a dispersed, non-aggregated state is not porous, and any surface area present in these particles is on the external surface of the primary, non-aggregated particles, i.e., there is no surface area provided by internal porosity in the particles.

Dispersions of relatively small silica gel particles known as "silica microgels" are disclosed in U.S. Patent 4,954,220. Silica microgel particle dispersions are prepared by reacting alkali metal silicates and acid under conditions to initiate the coalescence and gelling of primary particles. The conditions, however, are also selected so that the gelled particles only grow to small, e.g., submicron, sizes. The dispersion in which microgel particles are prepared is not processed to the point that the coalescing particles form a rigid macrogel. Microgels are typically prepared from sol dispersions having less than . 10%, and more typically less than one percent by weight solids.

European Patent Application 468,070 discloses preparing a dispersion of gel particles having particle sizes in the range of 1 to 50 microns, preferably in the range of 10-30 microns, by wet milling larger gel particles. The particles resulting from the wet milling are reported to have surface areas ranging from 50 to 700 $m^2/g$ and pore volumes of 0.3 to 2 cc per gram. The wet milled particles are then spray dried to make larger spherical particles in the range of 1 to 200 microns, preferably 30-100 microns. This patent discloses using the spray dried particles as carriers for polyolefin catalysts and that the larger spherical particles in the range of 30-100 microns are preferable.

U.S. Patent 5,030,286 discloses high solids content dispersions, e.g., from 40 to about 55% by weight, of precipitated silica. The precipitated silicas illustrating the dispersions of this patent have average particle sizes greater than one micron. The dispersions are prepared by milling the precipitated silica. It is reported in the 286 patent that milling the precipitated silica results in a less viscous dispersion and allows the dispersions to be used at high solids concentrations. The ’286 patent discloses that these high concentration dispersions can be used in paper coatings.

European Patent Application 803 374 discloses using agglomerated silica particles having average particle sizes of 10-300 nm in ink receptive layers for ink jet paper. It is disclosed that these particles are prepared from grinding larger particles, e.g., having sizes of 9 $\mu$.

A copending application having Serial No. 878,476 filed on June 19, 1997, discloses wet milling inorganic oxide gels to obtain average particle sizes of 3 to 6 microns. This patent application discloses that any particles below 1 micron are present at a maximum amount of 40 percent by weight. The particles described in this application are then spray dried to form catalyst supports.

U.S. Patent 4,983,369 discloses a dispersion of dense spherical particles having average particle sizes of 0.1 to 10 microns. The ’369 patent also discloses that the spherical particles can be either nonporous or porous. The ’369 patent also discloses that the porosity of the porous particles is reduced when contacted with water. The porous particles made by the process described in the ’369 patent have particle sizes greater than one micron.

U. S. Patent 5,277,888 discloses using organic dispersing medium to make stable dispersions of particles having average sizes in the range of 0.05 to 10 microns. The patent illustrates the dispersion with dense non-porous silica particles.

U.S. Patent 2,731,326 discloses aggregates of dense, low porosity silica spheroids wherein the aggregates are described as supercolloidal, i.e., larger than 100 millimicrons (0.1 micron). These aggregated particles have primary particle sizes greater than 15 nanometers and are described as having a size such that they appear as a precipitate when they are prepared in dispersion.

U.S. Patent 2,741,600 discloses preparing dispersions of silica having average particle sizes below 1 micron, e.g., of between 0.1 and 0.5 microns. The dispersions disclosed in the ’600 patent are produced by milling autoclaved silica gels. The material resulting from the autoclaving step is described as possessing two phases, i.e., an aquasol phase and a "mud" phase. The mud phase is milled to form a dispersion described as having a milky white appearance. The two phases can be used separately, or as a combination. Porosity of the milled mud phase or the aquasol phase produced during autoclaving is not reported nor described in this patent.

Iler’s "Chemistry of Silica", pages 328-330, (1979) discloses porous silica sols which are prepared through various procedures. The porous silica sols described in Iler’s treatise range in size from 0.1 to 0.3 microns. In general, these submicron sized particles are prepared by aggregation of smaller particles. The surface areas of the particles produced are reported to be in the range of 22 $m^2/g$ to over 700 $m^2/g$, depending on the methodology used to prepare the particles. For example, U.S. Patent 3,607,774 referred to by Iler discloses silica sols of 0.5 microns or greater, e.g., up to about 1.5 microns. The ’774 patent reports making sols having surface areas of about 103 $m^2/g$ or less. Another patent referred to by Iler, i.e., U.S. Patent 3,591,518 discloses porous silica sols making particle sizes of about 0.2 microns and external surface areas in the range of 17-900 $m^2/g$. Pore sizes, pore volume and pore volume stability for the particulates of the two aforementioned patents are not reported.

WO 97/22670 discloses precipitated silicates and slurries prepared by destructuring aluminum silicate and silica via dry milling and then formulating slurries by addition of water. Slurries comprising the destructured materials have reduced viscosities compared to slurries of unmilled silica at equal solids content. Those slurries also have reduced DPB values. The median particle size for these particles is significantly greater than one micron.

German Patent No. DE 19534327 to Koch describes a particulate dispersion containing particles, binder and a dispersant. The components are merely admixed to form the coating mixture.

U.S. Patent No. 5,720,806 to Tokuyama relates to micronized silica powder that contains at least 0.3-1.0% by weight of alumina oxide. The aluminum oxide is incorporated in the silica during formation of the particle.

U.S. Patent No. 2,892,797, to Alexander, describe treating a colloidal silica aquasol in which the silica particles have an average size from 3 to 150 millimicrons by adding to it an aqueous solution of, e.g., sodium aluminate. However, the silica particles in this invention do not contain internal porosity, and there is no reference to the improved solids/ viscosity relationship claimed for the present invention.

U.S. Patents Nos. 6,420,456 B1; 6,312,861 B1; 6,214,106 B1; 6,096,469; 4,877,451; 5,376,172; Re. 30,450; and 4,263,051 describe silica materials wherein silica particles are coated with a organic silane compounds.

U.S. Patent No. 6,415,996 B1 to Adair et al. relates to a method of chemically assisted milling of ceramic powders. The pH of the dispersion is continuously monitored and passivating agent added in order to prepare particles that possess smooth surfaces.

There are also patent applications for fumed silica doped with alumina, e.g., U.S. Patent Application Publication No. 20010042493 A1 to Degussa. Silica made cationic with aluminum chlorohydrol is the subject of DE Patent Application No. 95 34 327 A1. U.S. Patent Application Publication No.2002/0040661 A1 describes aminopropylsilane treated fumed and precipitated silica. U.S. Patent No. 6,420,039 B1 to Cabot describes a ' cationic alumina coating on fumed silica. U.S. Patent No. 5,472,473, to Cabot, describes fumed silica having a surface modified with a quaternary salt. As indicated above, a dispersion of particles can be used to form porous structures, e.g., ink receptive coatings for paper. It is desirable if the porosity in such coatings not only provides a means for increasing the rate of ink absorption for certain paper coatings, but also provides for relatively high ink capacity in order to retain high resolution images.

However, a significant problem involved with dispersions containing porous particles relates to loading capacity. Due to the very nature of the porous particles, as the solids content or loading of the particulate in the dispersion increases, the viscosity also increases at an exponential rate. Additionally, porous particulate dispersions are typically unstable. To complicate matters further, most coating applications require dispersions to be above 20% solids.

All of the above-mentioned documents describe porous particulate dispersions that try to ameliorate problems with low concentration and poor stability by adding certain dispersion aids to the milled product. Even though these dispersion aids have yielded improved loading capacities and stability, there remains a need for even further improvements in loading capacity and stability of porous particulate dispersions.

<u>SUMMARY OF THE INVENTION</u>

The present invention relates to a dispersion of porous surface modified anionic silica particles comprising fluid, and the surface modified anionic silica particles; wherein the maximum fractional occupied volume ($\Phi_{max}$) of the particles in the dispersion is at least about 0.55 as determined from the relationship

$$\eta / \eta_0 = [1 - (\Phi / \Phi_{max})]^{-[b]\Phi_{max}} \qquad (I)$$

wherein $\Phi$ is the fractional occupied volume of the solids in the fluid, $\Phi_{max}$ is the asymptotic limit of fractional occupied volume as the viscosity approaches infinity, b is the intrinsic viscosity, $\eta_0$ is the viscosity of the fluid/solvent and $\eta$ is the viscosity of the dispersion.

Another embodiment of the present invention pertains to a coating formulation comprising said dispersion that includes the porous silica particles as describe above in particular used in combination with a binder and optional additives, wherein the formulation can be used to provide a coating on a substrate.

A further embodiment of the present invention relates to a coating on a substrate comprising said dispersion which coated substrate comprises a substrate and at least one layer thereon including the coating formulation set forth above.

An even further embodiment of the present invention relates to a method of preparing said dispersion of porous surface modified anionic silica particles including forming a slurry of inorganic oxide particles and milling the slurry to form the dispersion of particles wherein the slurry includes a chemical agent that increases the maximum occupied volume of the particles in the dispersion.

BRIEF DESCRIPTION OF DRAWINGS

FIG. 1 and FIG. 3 are graphical representations of the viscosity versus percent solids for dispersions of the present invention with respect to comparative dispersions.

FIG. 2 and FIG. 4 are graphical representations of the viscosity versus the fractional occupied volume for dispersions of the present invention with respect to comparative dispersions.

DETAILED DESCRIPTION OF PREFERRED EMBODIMENTS

The silica particles of the subject invention provide dispersions possessing high particle or solids concentrations with low viscosities and improved stability compared to particle dispersions prepared by conventional methods.

The present invention relates to a dispersion of porous, anionic, sub-micron silica particles, (i.e., including a fluid and the porous, anionic silica particles) wherein the particles have been surface modified, and as a result exhibit an improved viscosity versus percent solids relationship and an improved viscosity versus fractional occupied volume relationship when compared to unmodified materials. The porosity (or total pore volume) of the particles is typically measured either before preparation of the dispersion or after the final dispersion has been dried, by means of nitrogen porosimetry. A more direct measure of the porosity of the particles in the dispersion (referred to as the apparent pore volume, $PV_a$) can be obtained using a viscosity-derived method (as described in U.S. Patent No. 6,380,265). The relationship between viscosity and maximum occupied volume is given by the relationship:

$$\eta / \eta_0 = [1 - (\Phi / \Phi_{max})]^{-[b]\Phi_{max}}$$

wherein $\Phi$ is the fractional occupied volume of the solids in the fluid, $\Phi_{max}$ is the asymptotic limit of fractional occupied volume as the viscosity approaches infinity, b is the intrinsic viscosity, $\eta_0$ is the viscosity of the fluid/solvent and $\eta$ is the viscosity of the dispersion.

The apparent porosity of the silica particles of the present invention is about 0.5 $cm^3/g$ or greater, preferably greater than about 0.8 $cm^3/g$, and more preferably greater than about 1.1 $cm^3/g$ up to 3.0 $cm^3/g$ or more. Further, a parameter that relates to the viscosity of the dispersions of the present particles, the maximum fractional occupied volume ($\Phi_{max}$), is determined to be at least about 0.55, preferably at least about 0.60, and more preferably at least about 0.65 up to 0.80 or more. The intrinsic viscosity b is about 3.5, preferably between about 2.5 to about 3.5, and more preferably about 2.5.

The anionic nature of the silica particles can be determined by the zeta potential measured on the particle dispersions, and the zeta potential of the particles of the present invention is less than zero (i.e., is negative). The size of the particles in the present dispersion can be characterized by measurement of particle size, using a method such as dynamic or static light scattering. One parameter obtained using this method, the $D_{50}$, or median size (by volume) is typically about 3 microns or less for the dispersions of the present invention.

(1) Parent Silica Particles

Silica suitable for preparing the dispersion include porous precipitated silica, silica gels and fumed silica. These silicas are referred to herein as "parent silicas," "parent particles" or "parent dispersions". Amorphous precipitated silica, silica gels and fumed silica are particularly suitable parent silicas.

In embodiments comprising gels, the dispersions are derived from porous silica gels such as, but not limited to, gels comprising $SiO_2$. The gels can be hydrogels, aerogels, or xerogels. A hydrogel is also known as an aquagel which is formed in water and as a result its pores are filled with water. A xerogel is a hydrogel with the water removed. An aerogel is a type of xerogel from which the liquid has been removed in such a way as to minimize any collapse or change in the gel's structure as the water is removed. Silica gels commercially available as Syloid® grade gels, e.g., grades 74, 221, 234, 244, W300, and Genesis™ silica gels are suitable parent silicas.

Gels are well known in the art. See Iler's "The Chemistry of Silica", p. 462 (1979). Gel, e.g. silica gel, particles are distinguishable from colloidal silica or precipitated silica particles. For example, colloidal silica is prepared as a slurry of dense, non-porous silica particles. Colloidal silica particles typically are smaller than 200nm (0.2 micron). As mentioned earlier, these particles do not have internal porosity. On the other hand, typical dispersed precipitated particles have some internal porosity. In some cases, the internal porosity in typically precipitated particles, however, largely collapse under capillary pressure created by receding menisci of water as the water evaporates during drying. The conditions for making colloidal silica and precipitated silica are well known.

Gels, on the other hand, are prepared under conditions which promote coalescence of primary particles (typically having median particles sizes of 1 to 10 nm, as measured under transmission electron microscopy, i.e., TEM) to form a relatively rigid three dimensional network. The coalescence of gel is exhibited on a macroscale when a dispersion of silica, hardens to a "gel" or "gelled" mass having structural integrity.

Methods of preparing silica gels are well known in the art. For example, a silica gel is prepared by mixing an aqueous solution of an alkali metal silicate (e.g., sodium silicate) with a strong acid such as nitric or sulfuric acid, the mixing being done under suitable conditions of agitation to form a clear silica sol which sets into a hydrogel, i.e., macrogel, in less than about one-half hour. The resulting gel is then washed. The concentration of $SiO_2$, formed in the hydrogel is usually in the range of about 10 and about 50, preferably between about 20 and about 35, and most preferably between about 30 and about 35 weight percent, with the pH of that gel being from about 1 to about 9, preferably 1 to about 4. A wide range of mixing temperatures can be employed, this range being typically from about 20 to about 50°C.

The newly formed hydrogels are washed simply by immersion in a continuously moving stream of water, which leaches out the undesirable salts, leaving about 99.5 weight percent or more pure silica behind.

The pH, temperature, and duration of the wash water will influence the physical properties of the silica, such as surface area (SA) and pore volume (PV). Silica gel washed at 65-90°C at pH's of 8-9 for 15-36 hours will usually have SA's of 250-400 and form aerogels with PV's of 1.4 to 1.7 cc/gm. Silica gel washed at pH's of 3-5 at 50-65°C for 15-25 hours will have SA's of 700-850 and form aerogels with PV's of 0.6-1.3. These measurements are generated by the well known $N_2$ porosity method.

Reinforced precipitated silica such as that described in U.S. Patent 4,157,920 can also be used to prepare the dispersion of this invention. For example, reinforced precipitated silicas can be prepared by first acidulating an alkali inorganic silicate to create an initial precipitate. The resulting precipitate is then reinforced or "post conditioned" by additional silicate and acid. The precipitate resulting from the second addition of silicate and acid comprises 10 to 70% by weight of the precipitate initially prepared. It is believed that the reinforced structure of this precipitate is more rigid than conventional precipitates as a result of the second precipitation. It is believed that even after milling, centrifuging and subsequent drying, the reinforced silicate substantially maintains its network rigidity and porosity. This is in contrast to other precipitated silicas such as those disclosed in U.S. Patent 5,030,286.

In another embodiment, the silica comprises fumed silica. Fumed silica may be fabricated using the processes described in DE 762723. Production of fumed silica is also discussed in Ullmann's Encyclopaedia of Industrial Chemistry, Vol. A23, 1993, Chapter 6.

Once al silica is selected for the parent dispersion, a liquid phase of the selected silica is prepared. The fluid for the liquid phase can be aqueous or organic. The liquid phase can be residual water in silica gels which have been drained, but not yet dried, and to which additional water is added to reslurry the gel. In another embodiment, dried silicas, e.g., xerogels, are dispersed in liquid medium. In general, the parent dispersion should be in a state that can be wet milled. In most embodiments, the parent dispersion has a median particle size approximately in the range of 5 to 40 microns. However, the size of the parent particles only needs to be sufficient such that the mill being used can produce a dispersion having the desired median particle size at about or below 3 microns. In embodiments prepared from a drained silica gel, the drained gel may first be broken up into gel chunks and premilled to produce a dispersion of particles in the range of 5 to 40 microns.

(2) Milling

The parent dispersion is then milled. The milling is conducted "wet", i.e., in liquid media. The general milling conditions can vary depending on the feed material, residence time, impeller speeds, and milling media particle size. Suitable conditions and residence times are described in the Examples. These conditions can be varied to obtain the desired size within the range of 0.05 to about 3 microns. The techniques for selecting and modifying these conditions to obtain the desired dispersions are known to those skilled in the art..

The milling equipment used to mill the parent silica particles should be of the type capable of severely milling and reducing materials to particles having sizes about three microns or smaller, particularly below one micron, e.g., through mechanical action. Such mills are commercially available, with hammer and sand mills being particularly suitable for this purpose. Hammer mills impart the necessary mechanical action through high speed metal blades, and sand mills impart the action through rapidly churning media such as zirconia or sand beads. Impact mills can also be used. Both impact mills and hammer mills reduce particle size by impact of the silica with metal blades. A dispersion comprising particles of three microns or smaller is then recovered as the final product.

The milling process is conducted utilizing a chemical agent in admixture with silica particles. The process provides surface modification of the particles as they are milled. For example, the parent silica dispersions of the above description are then surface modified during milling with a water-soluble metalate of an amphoteric metal which forms an insoluble silicate at a pH between 5 and 12. In principle, metals that could be used include aluminum, tin, zinc and lead, with aluminum being the most preferred of these. The metals can be added in alkaline solution in the form of an alkali metalate such as sodium, potassium, tetramethylammonium, or lithium aluminate, stannate, zincate or plumbite. Stable, water soluble metalate salts like sodium aluminate and sodium stannate, which can be readily dissolved to form relatively stable aqueous solutions in the absence of excess alkali are preferred treating agents. An example of such a metalate is sodium aluminate, $NaAlO_2$. The amount of metalate used to modify the surface depends on the particular application, but typically ranges from 0.5% (w/w silica) to 5% (w/w silica). Ideally, for the modified silica to retain a negative change and hence negative zeta potential, the aluminate should be added at high pH and under conditions that minimize the self-polymerization of the alumina. Hence, a recommended procedure is to first dissolve the aluminate in a dilute solution of deionized water, followed by addition of the parent silica precursor which is to be milled to small particle size. In this fashion, the aluminate reacts initially only with the surface of the silica. This is in contrast to the art disclosed in U.S. 5,720,806, wherein an alumina source is added to the silica as the latter is being synthesized. It is believed that the alumina in this case is dispersed throughout the entire silica network, and is not just available at the surface for surface modification.

Furthermore" in the milling process of the present invention, unreacted aluminated is present in the dispersion as it is milled, notably as the particles are fractured during milling. It is believed that the metalate ions become chemically bound to the silica surface, and that this surface modification lowers the viscosity of the dispersion such that higher solids loadings can be obtained.

The cation of the metalate salt is a reaction product once the metalate has bonded with the oxide surface, and if desired, this cation can be partly or entirely replaced with other suitable cations such as protons or other alkali metal cations by means of ionexchange. Cation exchange resins and methods are well known to those versed in this art.

The milled dispersion may also be further processed. For example, further processing is desirable if there is a significant population of particles larger than three microns after milling. Further processing may also be needed to insure that essentially all of the distribution of particles is below about two microns and especially when dispersions in the size range of 1 micron or less is desired. In such a case, the milled dispersion is processed to separate the dispersion into a supernatant phase, which comprises the particles of the final product, and a settled phase which comprises the larger particles. The separation can be created by centrifuging the milled silica particles. The supernatant phase is then removed from the settled phase, e.g., by decanting. The supernatant is the dispersion of this invention. Conventional centrifuges can be used for this phase separation. In some instances, it may be preferable to centrifuge the supernatant two, three or more times to further remove large particles remaining after the initial centrifuge. It is also contemplated that the larger particles of a milled dispersion can separate over time under normal gravity conditions, and the supernatant can be removed by decanting.

Depending on the product particle size targets, the settled phase also can be regarded as the particles of this invention. For example, if a dispersion of larger particles within the range of 0.05 to 3 microns is desired, the settled phase can be removed and redispersed. In such instances, the parent dispersion may need to be milled more than once to insure that the settled phase has the appropriate particle size in the range of 0.05 to 3 microns.

The dispersion of particles further can be modified after milling to insure a stable dispersion. This can be accomplished through pH adjustment, e.g., adding alkaline material, or by the addition of conventional dispersants.

The dispersion of particles can further be modified after milling to increase the solids content of the slurry, such as by ultrafiltration or evaporation of the solvent/fluid. In ultrafiltration, the slurry is passed over a membrane which has pores that are permeable to the fluid phase but not to the inorganic oxide phase. The mixture is then separated into a fluid rich permeate phase and a higher solids retentate phase.

(3) Silica Dispersion

As indicated earlier, the median particle size, i.e., particle diameter, of the particles in the dispersion is in the range of 0.05 to about 3 microns. The size is primarily dictated by the dispersion's use and can be in ranges of, e.g., between 0.06 to 2.9, 0.07 to 2.8, and so on. For example, if the dispersion is ultimately to be an ingredient in a coating formulation for high gloss ink-jet media, the dispersion should have a median particle size below 0.5 micron, and preferably in the range of 0.1 and 0.3 micron. The median particle size is measured using conventional light scattering instrumentation and methods. The sizes reported in the Examples were determined by a LA900 laser scattering particle size analyzer from Horiba Instruments, Inc.

The solids content of the dispersion varies and depends on the solids content of the feed particle dispersion as well as on the porosity of the solid phase. The solids content of the dispersion is generally in the range of 1-50% by weight, preferably 10-45% and more preferably 15-40% and all ranges in between, although in certain applications, the amount can be higher or lower.

In general, the dispersion's viscosity should be such that the dispersion is a pumpable liquid. The viscosity of the dispersion is highly dependent upon the dispersion's solids content and the porosity of the particles. Viscosity enhancers and agents can also be used to modify the dispersion's viscosity to fit particular applications. The viscosity can range from 1 to over 10,000 centiposes (cp) as measured by a Brookfield viscometer, e.g., operated at a shear rate of 73.4 $sec^{-1}$. In most embodiments, the viscosity is below 100 cp.

In order to unambiguously associate the benefit in viscosity versus solids to the surface modification treatment, it is necessary to consider the following.

First, the theoretical basis for the relationship between viscosity particle volume fraction is given by the Krieger-Dougherty Equation, as described in the text by P. C. Hiemenz and R. Rajagopalan, "Principles of Colloid and Surface Chemistry", 3rd ed., Marcel Dekker, Inc., New York (1997), p. 169. This relationship is given as

$$\eta / \eta_0 = [1 - (\Phi / \Phi_{max})]^{-[b]\Phi_{max}}$$

wherein $\Phi$ is the fractional occupied volume of the solids in the fluid, $\Phi_{max}$ is the asymptotic limit of fractional occupied volume as the viscosity approaches infinity, b is the intrinsic viscosity, $\eta_0$ is the viscosity of the fluid/solvent and $\eta$ is the viscosity of the dispersion.

This equation gives the viscosity of the suspension of particles as a function of the volume fraction occupied by the particles in the suspension. It is typical in the literature to report the viscosity of a dispersion as a function of the mass loading of the dispersion solids. Furthermore, in the present case, the particles are porous. Compared to less porous particles (at the same mass loading in a solvent), porous particles occupy a greater volume fraction of the solvent-particle system and, as such, they to a greater extent disrupt and offer greater resistance to shear flow of the fluid. In order to take explicit account of this effect of particle porosity on viscosity, the mass loading (% solids) must be converted to fractional volume. The expression that relates mass loading to volume loading as a function of particle pore volume is given in the equation below:

$$\Phi = [(1/\rho_s + PV_a)\, \rho_f\, x][1 - x(1 - \rho_f/\rho_s)]$$

x is mass loading
$\rho_s$ is particle skeletal density
$\rho_f$ is fluid density
$PV_a$ is particle pore volume (apparent)

Thus, in order to demonstrate the relationship between viscosity and fractional occupied volume, the pore volume of the particles must be known. In order to show that there is an intrinsic benefit of the surface modification on viscosity, it is necessary to include the effect of particle pore volume. The method of measuring $PV_a$ is given in U.S. Patent No. 6,380,265.

The pH of the dispersion depends upon the silica and additives used to stabilize the dispersion. The pH can be in the range of 2 to 11, and all ranges in between. Stable silica dispersions with negative zeta potential are generally moderately alkaline, e.g., pH 8 to 11.

The pH can also be modified using conventional pH modifiers.

With respect to embodiments comprising silica gel, the dispersion is relatively free of imparities when compared to embodiments comprising, for example, precipitated silica particles. Parent silica gels are typically washed to remove substantially all impurities. The alkali salt content of gels are typically as low as 100 ppm by weight and generally no more than 0.1% based on the weight of gel. The low impurity levels of silica gels are especially advantageous when colloidally stable dispersions of particles are desired.

The dispersion of this invention also is stable. By "stable dispersion" is meant a dispersion of fine particles which remain in suspension for long periods of time, and do not show evidence of particle agglomeration. The stability of a particle dispersion depends on a number of factors, including particle size, particle charge, porosity, particle density, and pH of the dispersion. These factors can vary and depend on how the dispersion is made. Conventional dispersants can be used for this purpose. As described earlier, "in situ" stable dispersions of particles also can be prepared by milling particles in the presence of a surface modifier, and recovering particles having a median particle size below one micron, preferably in the range of 0.01 to about 0.5 micron. Embodiments comprising particles prepared by this process generally have median particle sizes less than one micron.

The dispersion of this invention is suitable for many applications, and more particularly suitable for applications which benefit from porous particles having fine particle sizes. It has been found, for example, that the invention is well suited for ink receptive coatings. A high degree of porosity in a paper coating contributes to fast ink drytimes, minimal ink spreading (dot gain), good image resolution, high capacity for high ink-loads (such as for photorealistic ink-jet printing) and exceptional ink color gamut.

Ink-receptive coating formulations typically contain an inorganic pigment such as , silica gel, a binder and additives such as dye mordants, etc. The particles of this invention can be used as the inorganic pigment. Ink-receptive coatings prepared using particles of this dispersion are highly porous, which contributes to high porosity in the coating. A further advantage of the dispersions of the present invention is that the high solids dispersions enable high solids coating formulations to be prepared. High solids coating formulations are desirable since coating line speeds are often limited by the amount of drying capacity on the coating line, and higher solids formulation contain less solvent that must be removed during the drying step. Hence, high solids formulations enable high line speeds to be attained, which lowers production costs. Another advantage of the high solids dispersion is that it enables the coating formulator more flexibility in the choice of other formulation materials, such as binders. For example, a lower solids binder might be acceptable when used with the high solids dispersions of the present invention since the combined formulation solids is greater in the latter case. It should be remembered, of course, that the object of the present invention is to provide high solids dispersions and formulations with high intrinsic particle porosity, which can be achieved by using the surface modifiers of the present invention.

The surface modification of the particles in the dispersions according to the present invention provides an increase in the maximum fractional occupied volume ($\Delta\Phi$) of the solids/particles in the fluid of at least about 0.05, preferably, at least about 0.08, and more preferably, at least about 0.14.

The dispersion of this invention can be directly used as a coating composition as is. It is preferable for most applications, however, that the dispersion be combined with a binder and any other coating additives a paper manufacturer requires. As mentioned earlier, the solids content, pH and viscosity of the dispersion can be tailored to meet the specifications of the paper being coated.

Other uses for this invention include binders (e.g., for catalysts), fillers, cardboard stiffeners, rheological agents, abrasive additives in dentifrice compositions, corrosion inhibitors, leather treating agents, insulation coatings, cosmetic additives, fiber coatings, and the like.

The following Examples are given as specific illustrations of the claimed invention. It should be understood, however, that the invention is not limited to the specific details set forth in the Examples. All parts and percentages in the Examples, as well as in the remainder of the specification, are by weight unless otherwise specified.

Furthermore, any range of numbers recited in the specification or claims, such as that representing a particular set of properties, conditions, physical states or percentages, is intended to literally incorporate expressly herein any number flowing within such range, including any subset of numbers with any range so recited. Any modifications of the invention, in addition to those shown and described herein, will become apparent to those skilled in the art from the foregoing description and accompanying drawings. Such modifications are intended to fall within the scope of the appended claims.

**Illustrative Examples**

**Example 1**

Preparation of Sub-micron, Surface-Modified Silica Gel

This example demonstrates the preparation of a high solids, low viscosity dispersion by wet-milling a silica gel material in the presence of a surface modifier. First, a 3 % w/w solution of $NaAlO_2$ surface modifier (from EM Scientific) is prepared by adding the appropriate amount of $NaAlO_2$ to deionized water. A parent silica slurry is then prepared in the following proportions: 410 g of the 3 wt% $NaAlO_2$ solution is added to 1230 g deionized water. To this solution is added 2731 g (hydrous basis; 45% solids) of Syloid™ W500. With these proportions, the concentration of surface modifier ($Al_2O_3$) is 1 % (w/w $SiO_2$). The pore volume of the Syloid™ W500, measured by nitrogen porosimetry after vacuum activation (and removal of the pore water) is 1.20 $cm^3/g$. This suspension is then wet-milled using a Netzsch LabStar media mill and 0.4 - 0.7 mm SEPR media, with a flow rate of about 0.7 L/min for a total time of 180 min. After milling, the pH of the dispersion is 8.04, the median particle size (D50) is 0.29 microns, and the dispersion solids are 30.4%. The zeta potential measured for this dispersion is - 47.1 mV. A portion of the dispersion is dried, and the pore volume of the dried dispersion, measured by nitrogen porosimetry, is 0.73 $cm^3/g$. A summary of the properties of this dispersion as well as those for the Examples given below is shown in Table 1. A plot of the viscosity versus solids relationship for this dispersion is given in Figure 1. The viscosity-derived apparent pore volume, PVa, was determined according to the method disclosed in U. S. Patent No. 6,380,265. The result is 1.21 $cm^3/g$. The apparent pore volume is used to convert the mass loading of Figure 1 into the fractional occupied volume loading, as shown in Figure 2. These data are then fitted to equation I, and the fitted parameters are $\Phi_{max}$ = 0.62 with b = 3.3.

**Comparative Example 1A.**

Preparation of Sub-micron, Silica Gel without Surface Modification

This example demonstrates the preparation of a dispersion by wet-milling a silica gel material in the absence of the surface modifier. A parent silica slurry is prepared in the following proportions: To 3850 g deionized water is added 4884 g (hydrous basis; 45% solids) of Syloid W500. The pore volume of the Syloid W500, measured by nitrogen porosimetry after vacuum activation (and removal of the pore water) is 1.20 $cm^3/g$. This suspension was then wet-milled using a Netzsch LabStar media mill and 0.4 - 0.7 mm SEPR media, with a flow rate of about 0.7 L/min for a total time of 120 min. After milling, the pH of the dispersion was 8.15, the median particle size (D50) was 0.345 microns, and the dispersion solids were 24.9%. The zeta potential measured for this dispersion is -49.2 mV. A portion of the dispersion was dried, and the pore volume of the dried dispersion, measured by nitrogen porosimetry, was 0.70 $cm^3/g$. A plot of the viscosity versus solids relationship for this dispersion is given in Figure A. The viscosity-derived apparent pore volume, PVa, is determined according to the method disclosed in U. S. Patent No. 6,380,285. The result is 1.20 $cm^3/g$. The apparent pore volume is used to convert the mass loading of Figure 1 into the fractional occupied volume loading, as shown in Figure 3. These data are then fitted to equation (I), and the fitted parameters are $\Phi_{max}$ = 0.53 with b = 3.5.

**Comparative Example 1B**

Duplicate Preparation of Sub-micron, Silica Gel without Surface Modification

This example demonstrates the preparation of a dispersion by wet-milling a silica gel material in the absence of the surface modifier. A parent silica slurry is prepared in the following proportions: To 3850 g deionized water is added 4884 g (hydrous basis; 45% solids) of Syloid W500. The pore volume of the Syloid W500, measured by nitrogen porosimetry after vacuum activation (and removal of the pore water) is 1.20 $cm^3/g$. This suspension is then wet-milled using a Netzsch LabStar media mill and 0.4-0.7 mm SEPR media, with a flow rate of about 0.7 L/min for a total time of 180 min. After milling, the pH of the dispersion is 8.32, the median particle size (D50) is 0.347 microns, and the dispersion solids are 25.3%. A portion of the dispersion was dried, and the pore volume of the dried dispersion, measured by nitrogen porosimetry, is 0.69 $cm^3/g$. A plot of the viscosity versus solids relationship for this dispersion is given in Figure 1. The viscosity-derived apparent pore volume, PVa, is determined according to the method disclosed in U.S. Patent No. 6,380,265. The result is 1.20 $cm^3/g$. The apparent pore volume is used to convert the mass loading of Figure 1 into the fractional occupied volume loading, as shown in Figure 2. This data is then fitted to equation (I), are the fitted parameters are $\Phi_{max}$ = 0.54 with b = 3.5.

It can be seen in Figure 1 that Example 1 prepared according to the present invention has significantly lower viscosity at constant solids when compared to the comparative examples prepared without the surface modification. Furthermore, when the effect of the porous nature of the particles is taken into account by determining the fractional occupied volumes of the suspensions, it can be seen in Figure 2 that the dispersion prepared according to Example 1 still displays much lower viscosity than the dispersions prepared without surface modification.

**Example 2**

Preparation of Sub-micron, Surface-Modified Silica from Fumed Silica

This example demonstrates the preparation of a high solids, low viscosity dispersion by wet-milling a fumed silica material in the presence of a surface modifier. 21.4 g of $NaAlO_2$ surface modifier (from EM Scientific) is added to 3269 g deionized water. A parent silica slurry is then prepared by adding 1116.4 g of Degussa Aerosil A200. With these proportions, the concentration of surface modifier ($Al_2O_3$) is 2 % (w/w $SiO_2$). This suspension is then wet-milled using a Netzsch LabStar media mill and 0.4 - 0.7 mm SEPR media, with a flow rate of about 0.7 L/min for a total time of 200 min. After milling, the pH of the dispersion is 7.8, the median particle size (D50) is 0.16 microns, and the dispersion solids are 24.6%. A portion of the dispersion is dried, and the pore volume of the dried dispersion, measured by nitrogen porosimetry, is 0.90 $cm^3/g$. A plot of the viscosity versus solids relationship for this dispersion is given in Figure 2. The viscosity-derived apparent pore volume, PVa, is determined according to the method disclosed in U. S. Patent No. 6,380,265. The result is 2.31 $cm^3/g$. The apparent pore volume is used to convert the mass loading of Figure 3 into the fractional occupied volume loading, as shown in Figure 4. This data is then fitted to equation I, and the fitted parameters are $\Phi_{max}$ = 0.74 with b = 2.7.

**Comparative Example 2**

Preparation of Sub-micron

Fumed Silica without Surface Modification

This example demonstrates the preparation of a high solids, low viscosity dispersion by wet-milling a fumed silica material in the absence of the surface modifier. To 3467 g deionized water is added 694 g of Degussa Aerosil A200, and the pH is adjusted up by the simultaneous addition of aqueous ammonia. This suspension is then wet-milled using a Netzsch LabStar media mill and 0.4 - 0.7 mm SEPR media, with a flow rate of about 0.7 L/min for a total time of 60 min. After milling, the pH of the dispersion is 8.68, the median particle size (D50) is 0.19 microns, and the dispersion solids are 16.9%. A portion of the dispersion is dried, and the pore volume of the dried dispersion, measured by nitrogen porosimetry, is 1.02 $cm^3/g$. A plot of the viscosity versus solids relationship for this dispersion is given in Figure 3. The viscosity-derived apparent pore volume, PVa, is determined according to the method disclosed in U. S.6,380,265. The result is 2.04 $cm^3/g$. The apparent pore volume is used to convert the mass loading of Figure 3 into the fractional occupied volume loading, as shown in Figure 4. This data is then fitted to equation I, and the fitted parameters are $\Phi_{max}$ = 0.60 with b = 2.5.

It can be seen in Figure 3 that Example 2 prepared according to the present invention has lower viscosity at high solids when compared to the comparative example prepared without the surface modification. Furthermore, when the effect of the porous nature of the particles is taken into account by determining the fractional occupied volumes of the suspensions, it can be seen in Figure 4 that the dispersion prepared according to Example 2 displays dramatically lower viscosity than the dispersion prepared without surface modification.

**Comparative Example 3**

Preparation of Large Sized Alumina Modified Silica

U.S. Patent No. 5,720,806 describes an alumina-modified silica composition for ink-jet applications. A sample of commercial material (Finesil X37B from Tokuyama Corporation) believed to be an embodiment of the Claims of the above patent is obtained and analyzed. The chemical composition is determined to be 0.78 wt% Al2O3; 0.50 wt% Na2O, balance SiO2. Hence, this produce has a similar chemical composition to those in U.S. Patent No. 5,720,806. The particle of the material is measured, and the $D_{50}$ is 7.4 microns. A plot of the viscosity versus solids relationship for this dispersion is given in Figure 1. The apparent pore volume for this material dispersed in water is measured according to the method above, and is determined to be 2.25 cm3/g. The apparent pore volume is used to convert the mass loading of Figure 1 into the fractional occupied volume loading, as shown in Figure 2. This data is then fitted to equation (I), and the fitted parameters are $\Phi_{max}$ = 0.52 with b = 3.5. This data shows that the sample, even though it has roughly the same composition, has much higher viscosity than that for the material of this invention.

It can be seen in Figures 1 and 2 that the material prepared in accordance with U.S. Patent No. 5,720,806 has higher viscosity at constant solids and at constant fractional occupied volume when compared to the Examples of the present invention. Without being bound by theory, it is believed that the reason that this material does not show the expected benefit in viscosity associated with presence of sodium aluminate is that the aluminate is distributed throughout the particle by virtue of the synthesis procedure, rather than at the particle surface as for the present invention.

**Comparative Example 4**

Preparation of Aluminate Colloidal Silica.

U.S. Patent No. 2,892,797 describes the aluminate surface-modification of colloidal silica. Commercial products that embody the claims of that patent include Ludox® AM colloidal silica. This colloidal dispersion contains 30% solids (SiO2 plus Al2O3), is pH 8.9, and the particle size is nominally 12 nm. The viscosity versus solids relationship is determined. The apparent pore volume for this dispersion is measured according to the method above, and is determined to be 0.39 $cm^3/g$. A portion of the dispersion is dried, and the pore volume of the dried dispersion, measured by nitrogen porosimetry, is 0.23 $cm^3/g$. This material clearly does not have any significant porosity compared to the present invention and would not be suitable for ink adsorption.

Table 1 summarizes the properties of the previous examples. It is readily apparent that the dispersions according to the present invention possess superior loading capacities of porous particulates as evidenced by their higher $\Phi_{max}$ values.

**Table 1. Summary of Properties for Various Silica Dispersions**

| Property | Units | Example 1 | Example 2 | Comparative Example 1A | Comparative Example 1B | Comparative Example 2 | Comparative Example 3 | Comparative Example 4 |
|---|---|---|---|---|---|---|---|---|
| Pore Volume of Parent Silica | $cm^3/g$ | 1.2 | n/a | 1.2 | 1.2 | n/a | n/a | n/a |
| Milled Dispersion pH | | 8.04 | 7.8 | 8.15 | 8.32 | 8.68 | n/a | 8.9 |
| Milled Dispersion D50 | microns | 0.29 | 0.16 | 0.34 | 0.35 | 0.19 | n/a | 0.012 |
| Milled Dispersion Solids | wt% | 30.4 | 24.6 | 24.9 | 25.3 | 16.9 | n/a | 30 |
| Dried Dispersion Pore Volume | cm3/g | 0.73 | 0.9 | 0.7 | 0.69 | 1.02 | n/a | 0.23 |
| Dispersion Apparent Pore Volume | cm3/g | 1.21 | 2.31 | 1.2 | 1.2 | 2.04 | 2.25 | 0.39 |
| Dispersion Zeta Potential | mV | -47.1 | n/a | -49.2 | n/a | n/a | n/a | n/a |
| $\Phi_{max}$ | | 0.62 | 0.74 | 0.53 | 0.54 | 0.6 | 0.52 | n/a |
| b | | 3.3 | 2.7 | 3.5 | 3.5 | 2.5 | 3.5 | n/a |
| $\Delta\Phi$ | | 0.08/0.09 | 0.14 | 0.0 | 0.0 | 0.0 | 0.0 | 0.0 |

**Example 3a**

Preparation of coating formulations comprised of the surface-modified silicas of the present invention

A coating formulation consisting of silica and binder is prepared by mixing materials in the following proportions. 250 g of the surface-modified silica gel prepared according to Example 1 at 30.0 wt% solids is mixed with 161 g of a solution of 15.5 wt% polyvinylalcohol (CelVol 523 from Celanese) and 175 g deionized water. The total solids content of this mixture is 17.1 wt%, and the ratio of silica:PVOH is 3:1 on a solids basis. The mixture is coated onto a plastic PET film (Mellinex 534 from ICI), and is dried at 130 C for 1 min. The final coat weight is 20.1 g/$m^2$. Test patterns are printed onto the coated sheets using commercially available, narrow format ink-jet printers (EPSON C80; EPSON 880; Hewlett-Packard-970; EPSON 870). The uniformity of the unprinted coating is noted, and the appearance of the printed test patterns is given a rating in from 1 to 4 (1= very good; 2 = good; 3 = poor; 4 = very poor). Results are shown in Table 2.

**Example 3b**

Preparation of coating formulations comprised of the surface-modified silicas of the present invention at high solids

A coating formulation consisting of silica and binder is prepared by mixing materials in the following proportions. 250 g of the surface-modified silica gel prepared according to Example 1 at 30.0 wt% solids is mixed with 161 g of a solution of 15.5 wt% polyvinylalcohol (CelVol 523 from Celanese). No additional deionized water is added. The total solids content of this mixture is 24.3 wt%, and the ratio of silica:PVOH is 3:1 on a solids basis. The mixture is coated onto a plastic PET film (Mellinex 534 from ICI), and is dried at 130 C for 1 min. The final coat weight is 25.9 g/$m^2$. Test patterns are printed onto the coated sheets using commercially available, narrow format ink-jet printers (EPSON C80; EPSON 880; Hewlett-Packard-970; EPSON 870). The uniformity of the unprinted coating is noted, and the appearance of the printed test patterns is given a rating in from 1 to 4 (1= very good; 2 = good; 3 = poor; 4 = very poor). Results are shown in Table 2.

**Comparative Example 5**

Preparation of a coating formulation with sub-micron silica gel dispersion without surface modification

A coating formulation consisting of silica and binder is prepared by mixing materials in the following proportions. 375 g of the surface-modified silica gel prepared according to Comparative Example 1A at 20 wt% solids is mixed with 161 g of a solution of 15.5 wt% polyvinylalcohol (CelVol 523 from Celanese). An additional 50 g of deionized water is added. The total solids content of this mixture is 17.1 wt%, and the ratio of silica:PVOH was 3:1 on a solids basis. The mixture is coated onto a plastic PET film (Mellinex 534 from ICI), and is dried at 130 C for 1 min. The final coat weight is 20.1 g/$m^2$. Test patterns are printed onto the coated sheets using commercially available, narrow format ink-jet printers (EPSON C80; EPSON 880; Hewlett-Packard-970; EPSON 870). The uniformity of the unprinted coating is noted, and the appearance of the printed test patterns is given a rating in from 1 to 4 (1 = very good; 2 = good; 3 = poor; 4 = very poor). Results are shown in Table 2.

**Table 2. Application Performance Data for Various Samples**

| | | | Print Quality* | | |
|---|---|---|---|---|---|
| **Description** | **Coat wt (g/m2)** | **Comments** | **EPSON C80** | **EPSON 880** | **HP-970** |
| Example 3a | 20.1 | good uniformity | 3 | 3 | 2 |
| Example 3b | 25.9 | good uniformity | 2 | 2 | 1 |
| Comparative Example 5. | 20.1 | poor uniformity | 3 | 4 | 2 |

It can be seen that when the coated substrates are compared at constant coat weight, the coating prepared using the dispersion of the present invention has better uniformity than that prepared without the surface modification. As a direct result of the higher solids and lower viscosity of the dispersion of the present invention, the coating formulation could be prepared at higher total solids, and hence a higher coat weight could be achieved in a single pass. When the higher coat weight media of the present invention is compared against that prepared without the surface modified dispersion, it is observed that the print quality is superior for the formulation of the present invention. These results are unexpected benefits of the silica surface modification.

## Claims

1. A dispersion of porous surface modified anionic silica particles comprising:

   (a) fluid, and
   (b) the surface modified anionic silica particles with a maximum fractional occupied volume ($\Phi_{max}$) of said particles in said fluid of at least about 0.55, as determined from the relationship

$$\eta / \eta_0 = [1 - (\Phi / \Phi_{max})]^{-[b]\Phi_{max}}$$

   wherein $\Phi$ is the fractional occupied volume of the solids in the fluid, $\Phi_{max}$ is the asymptotic limit of fractional occupied volume as the viscosity approaches infinity, b is the intrinsic viscosity, $\eta_0$ is the viscosity of the fluid and $\eta$ is the viscosity of the dispersion.

2. A dispersion according to claim 1, wherein said silica particles comprise silica gel, precipitated silica or fumed silica.

3. A dispersion according to claim 1, wherein said particles possess median particle size in the range of about 0.05 to about 3.00 microns.

4. A dispersion according to claim 1, wherein $\Phi_{max}$ is at least about 0.60.

5. A dispersion according to claim 1, wherein $\Phi_{max}$ is at least about 0.65.

6. A dispersion according to claim 1, wherein $\Phi_{max}$ is at least about 0.75.

7. A dispersion according to claim 1, wherein b is at least about 2.5.

8. A dispersion according to claim 1, wherein b is in the range of about 2.5 to about 3.6.

9. A dispersion according to claim 1, wherein the particles possess a negative zeta potential.

10. A dispersion according to claim 1, wherein surface modification of solid particles provides an increase in $\Phi$ of at least about 0.05.

11. A dispersion according to claim 1, wherein the porosity of said particles in solid dispersion is at least about 0.5 cc/g as measured by viscosity derived pore volume.

12. A method of preparing a dispersion of porous surface-modified anionic silica particles as defined in claim 1 comprising:

    (a) forming a slurry of silica particles and fluid; and
    (b) milling the slurry to form the dispersion of particles;

    wherein the slurry comprises a chemical agent that increases the volume fraction of the particles in the dispersion.

13. A method according to claim 12, wherein the porosity of said particles in solid dispersion is at least about 0.5 cc/g as measured by viscosity derived pore volume.

14. A method according to claim 12, wherein said silica particles comprise silica gel, precipitated silica or fumed silica.

15. A method according to claim 12, wherein said particles possess a median particle size in the range of about 0.05 to about 3.00 microns.

16. A method according to claim 12, wherein $\Phi_{max}$ is at least about 0.60.

17. A method according to claim 12, wherein $\Phi_{max}$ is at least about 0.65.

**18.** A method according to claim 12, wherein $\Phi_{max}$ is at least about 0.75.

**19.** A method according to claim 12, wherein b is less than 3.5.

**20.** A method according to claim 12, wherein b is in the range of about 2.5 to about 3.5.

**21.** A method according to claim 12, wherein the particles possess a negative zeta potential.

**22.** A method according to claim 12 wherein the particles possess a positive zeta potential.

**23.** A method according to claim 12, wherein surface modification of solid particles provides an increase in $\Phi$ of at least about 0.05.

**24.** A method according to claim 12, wherein the particles possess a percentage of solids of greater than about 25 wt%.

**25.** A method according to claim 12, wherein said chemical agent is present in said slurry in an amount of about 0.5 to about 7.0 weight % by weight of said dispersion.

**26.** A method according to claim 12, wherein said chemical agent comprises a water-soluble metalate of an amphoteric metal which include aluminum, tin, zinc and lead, with aluminum being the most preferred of these. The metals can be added in alkaline solution in the form of an alkali metalate such as sodium, potassium, tetramethylammonium, or lithium aluminate, stannate, zincate or plumbite. Sodium aluminate is the most preferred chemical agent.

**27.** A method according to Claim 12, wherein the chemical agent is in the form of an alkali metalate.

**28.** A method according to claim 12, wherein the chemical agent is sodium, potassium, tetramethylammonium, or lithium aluminate, stannate, zincate or plumbite.

**29.** A method according to claim 12, wherein the chemical agent is sodium aluminate.

**30.** A coating formulation comprising a dispersion according to claim 1.

**31.** A coating on a Substrate comprising a dispersion according to claim 1.

**Patentansprüche**

**1.** Dispersion von porösen, oberflächenmodifizierten, anionischen Siliciumdioxidteilchen, die

(a) Fluid, und
(b) die oberflächenmodifizierten, anionischen Siliciumdioxidteilchen mit einem maximalen fraktionellen besetzten Volumen ($\Phi_{max}$) der Teilchen in dem Fluid von mindestens etwa 0,55, wie bestimmt anhand der Gleichung

$$\eta/\eta_0 = [1 - (\Phi/\Phi_{max})]^{-[b]\Phi_{max}},$$

umfasst,
wobei $\Phi$ das fraktionelle besetzte Volumen der Feststoffe in dem Fluid ist, $\Phi_{max}$ die asymptotische Grenze des fraktionellen besetzten Volumens ist, wenn die Viskosität sich dem Unendlichen nähert, b die intrinsische Viskosität ist, $\eta_0$ die Viskosität des Fluids ist und $\eta$ die Viskosität der Dispersion ist.

**2.** Dispersion nach Anspruch 1, bei der die Siliciumdioxidteilchen Siliciumdixioxidgel, ausgefälltes Siliciumdioxid oder rauchendes Siliciumdioxid umfassen.

**3.** Dispersion nach Anspruch 1, bei der die Teilchen eine mediane Teilchengröße im Bereich von etwa 0,05 bis etwa 3,00 µm besitzen.

**4.** Dispersion nach Anspruch 1, bei der $\Phi_{max}$ mindestens etwa 0,60 ist.

**5.** Dispersion nach Anspruch 1, bei der $\Phi_{max}$ mindestens etwa 0,65 ist.

**6.** Dispersion nach Anspruch 1, bei der $\Phi_{max}$ mindestens etwa 0,75 ist.

**7.** Dispersion nach Anspruch 1, bei der b mindestens etwa 2,5 ist.

**8.** Dispersion nach Anspruch 1, bei der b im Bereich von etwa 3,5 bis etwa 3,6 liegt.

**9.** Dispersion nach Anspruch 1, bei der die Teilchen ein negatives Zeta-Potential besitzen.

**10.** Dispersion nach Anspruch 1, bei der Oberflächenmodifikation der festen Teilchen eine Zunahme von $\Phi$ um mindestens etwa 0,05 bewirken.

**11.** Dispersion nach Anspruch 1, bei der die Porosität der Teilchen in fester Dispersion mindestens 0,5 $cm^3/g$ ist, wie gemessen durch von Viskosität abgeleitetem Porenvolumen.

**12.** Verfahren zur Herstellung einer Dispersion von porösen, oberflächenmodifizierten, anionischen, Siliciumdioxidteilchen gemäß Anspruch 1, bei dem

(a) eine Aufschlämmung von Siliciumdioxidteilchen und Fluid gebildet wird, und
(b) die Aufschlämmung gemahlen wird, um die Teilchendispersion zu bilden,

wobei die Aufschlämmung ein chemisches Mittel umfasst, das die Volumenfraktion der Teilchen in der Dispersion erhöht.

**13.** Verfahren nach Anspruch 12, bei dem die Porosität der Teilchen in fester Dispersion mindestens etwa 0,5 $cm^3/g$ beträgt, wie gemessen durch von Viskosität abgeleitetem Porenvolumen.

**14.** Verfahren nach Anspruch 12, bei dem die Siliciumdioxidteilchen Siliciumdioxidgel, ausgefälltes Siliciumdioxid und rauchendes Siliciumdioxid umfassen.

**15.** Verfahren nach Anspruch 12, bei dem die Teilchen eine mediane Teilchengröße im Bereich von etwa 0,05 bis etwa 3,00 µm besitzen.

**16.** Verfahren nach Anspruch 12, bei dem $\Phi_{max}$ mindestens 0,60 ist.

**17.** Verfahren nach Anspruch 12, bei dem $\Phi_{max}$ mindestens etwa 0,65 ist.

**18.** Verfahren nach Anspruch 12, bei dem $\Phi_{max}$ mindestens etwa 0,75 ist.

**19.** Verfahren nach Anspruch 12, bei dem b kleiner als 3,5 ist.

**20.** Verfahren nach Anspruch 12, bei dem b im Bereich von etwa 2,5 bis etwa 3,5 liegt.

**21.** Verfahren nach Anspruch 12, bei dem die Teilchen ein negatives Zeta-Potential besitzen.

**22.** Verfahren nach Anspruch 12, bei dem die Teilchen ein positives Zeta-Potential besitzen.

**23.** Verfahren nach Anspruch 12, bei dem die Oberflächenmodifikation der festen Teilchen eine Zunahme von $\Phi$ um mindestens etwa 0,05 bewirkt.

**24.** Verfahren nach Anspruch 12, bei dem die Teilchen einen Prozentsatz von Feststoffen größer als etwa 25 Gew.-% besitzen.

**25.** Verfahren nach Anspruch 12, bei dem das chemische Mittel in der Aufschlämmung in einer Menge von etwa 0,5 bis etwa 7,0 Gew.-% der Dispersion vorhanden ist.

**26.** Verfahren nach Anspruch 12, bei dem das chemische Mittel ein wasserlösliches Metallat eines amphoteren Metalls umfasst, das Aluminium, Zinn, Zink, und Blei enthält, wobei Aluminium das am meisten Bevorzugte davon ist, die Metalle in alkalischer Lösung in Form eines Alkalimetallats wie beispielsweise Natrium-, Kalium-, Tetramethylammonium- oder Lithiumaluminat, -stannat, oder -zinkat oder -plumbit zugesetzt werden kann, wobei Natriumaluminat das am meisten bevorzugte chemische Mittel ist.

**27.** Verfahren nach Anspruch 12, bei dem das chemische Mittel in Form eines Alkalimetallats vorliegt.

**28.** Verfahren nach Anspruch 12, bei dem das chemische Mittel, Natrium-, Kalium-, Tetramethylammonium- oder Lithiumaluminat, -stannat, -zinkat, oder -plumbit ist.

**29.** Verfahren nach Anspruch 12, bei dem das chemische Mittel Natriumaluminat ist.

**30.** Beschichtungsformulierung, die eine Dispersion gemäß Anspruch 1 umfasst.

**31.** Beschichtung auf einem Substrat, die eine Zusammensetzung gemäß Anspruch 1 umfasst.

## Revendications

**1.** Dispersion de particules de silice anionique à surface modifiée, poreuses, comprenant:

(a) du fluide, et
(b) les particules de silice anionique à surface modifiée avec un volume occupé fractionnaire maximal (Φmax) desdites particules dans ledit fluide d'au moins environ 0,55, tel que déterminé à partir de la relation :

$$\eta / \eta_0 = [1 - (\Phi / \Phi_{max})]^{-[b]\Phi_{max}}$$

dans laquelle Φ est le volume fractionnel occupé des matières solides dans le fluide, $\Phi_{max}$ est la limite asymptotique du volume fractionnel occupé à mesure que la viscosité se rapproche de l'infini, b est la viscosité intrinsèque, $\eta_0$ est la viscosité du fluide et η est la viscosité de la dispersion.

**2.** Dispersion selon la revendication 1, dans laquelle lesdites particules de silice comprennent du gel de silice, la silice précipitée ou de la silice pyrogénée.

**3.** Dispersion selon la revendication 1, dans laquelle lesdites particules présentent une taille moyenne de particules dans la plage d'environ 0,05 à environ 3,00 microns.

**4.** Dispersion selon la revendication 1, dans laquelle $\Phi_{max}$ est d'au moins environ 0,60.

**5.** Dispersion selon la revendication 1, dans laquelle $\Phi_{max}$ est d'au moins environ 0,65.

**6.** Dispersion selon la revendication 1, dans laquelle $\Phi_{max}$ est d'au moins environ 0,75.

**7.** Dispersion selon la revendication 1, dans laquelle b est d'au moins environ 2,5.

**8.** Dispersion selon la revendication 1, dans laquelle b est compris dans la plage d'environ 2,5 à environ 3,6.

**9.** Dispersion selon la revendication 1, dans laquelle les particules présentent un potentiel zêta négatif.

**10.** Dispersion selon la revendication 1, dans laquelle la modification de surface de particules solides permet une augmentation de Φ d'au moins environ 0,05.

**11.** Dispersion selon la revendication 1, dans laquelle la porosité desdites particules en dispersion solide est d'au moins environ 0,5 $cm^3/g$, telle que mesurée par le volume de vide dérivé de la viscosité.

**12.** Procédé de préparation d'une dispersion de particules de silice anionique à surface modifiée, poreuses telle que définie à la revendication 1, comprenant :

(a) la formation d'une suspension de particules d'oxyde inorganique et de fluide, et
(b) le broyage de la suspension pour former la dispersion de particules ;

dans lequel la suspension comprend un agent chimique qui augmente la fraction volumique des particules dans la dispersion.

**13.** Procédé selon la revendication 12, dans lequel la porosité desdites particules en dispersion solide est d'au moins environ 0,5 $cm^3/g$, telle que mesurée par le volume de vide dérivé de la viscosité.

**14.** Procédé selon la revendication 12, dans lequel lesdites particules de silice comprennent du gel de silice, de la silice précipitée ou de la silice pyrogénée.

**15.** Procédé selon la revendication 12, dans lequel lesdites particules présentent une taille moyenne de particules dans la plage d'environ 0,05 à environ 3,00 microns.

**16.** Procédé selon la revendication 12, dans lequel $\Phi_{max}$ est d'au moins environ 0,60.

**17.** Procédé selon la revendication 12, dans lequel $\Phi_{max}$ est d'au moins environ 0,65.

**18.** Procédé selon la revendication 12, dans lequel $\Phi_{max}$ est d'au moins environ 0,75.

**19.** Procédé selon la revendication 12, dans lequel b est inférieur à 3,5.

**20.** Procédé selon la revendication 12, dans lequel b est compris dans la plage d'environ 2,5 à environ 3,5.

**21.** Procédé selon la revendication 12, dans lequel les particules présentent un potentiel zêta négatif.

**22.** Procédé selon la revendication 12, dans lequel les particules présentent un potentiel zêta positif.

**23.** Procédé selon la revendication 12, dans lequel la modification de surface de particules solides permet une augmentation de $\Phi$ d'au moins environ 0,05.

**24.** Procédé selon la revendication 12, dans lequel les particules présentent un pourcentage de matières solides de plus d'environ 25% en poids.

**25.** Procédé selon la revendication 12, dans lequel ledit agent chimique est présent dans ladite suspension en une quantité en poids d'environ 0,5 à environ 7,0%, en poids de ladite dispersion.

**26.** Procédé selon la revendication 12, dans lequel ledit agent chimique comprend un métallate soluble à l'eau d'un métal amphotère qui comprend l'aluminium, l'étain, le zinc et le plomb, l'aluminium étant le plus préféré de ceux-ci. Les métaux peuvent être ajoutés dans une solution alcaline sous la forme d'un métallate alcalin tel que l'aluminate, le stannate, le zincate ou le plumbite de sodium, de potassium, de tétraméthylammonium ou de lithium, l'aluminate de sodium étant l'agent chimique le plus préféré.

**27.** Procédé selon la revendication 12, dans lequel l'agent chimique est sous la forme d'un métallate alcalin.

**28.** Procédé selon la revendication 12, dans lequel l'agent chimique est l'aluminate, le stannate, le zincate ou le plumbite de sodium, de potassium, de tétraméthylammonium ou de lithium.

**29.** Procédé selon la revendication 12, dans lequel l'agent chimique est de l'aluminate de sodium.

**30.** Une composition de revêtement comprenant une dispersion selon la revendication 1.

**31.** Un revêtement sur un substrat comprenant une dispersion selon la revendication 1.

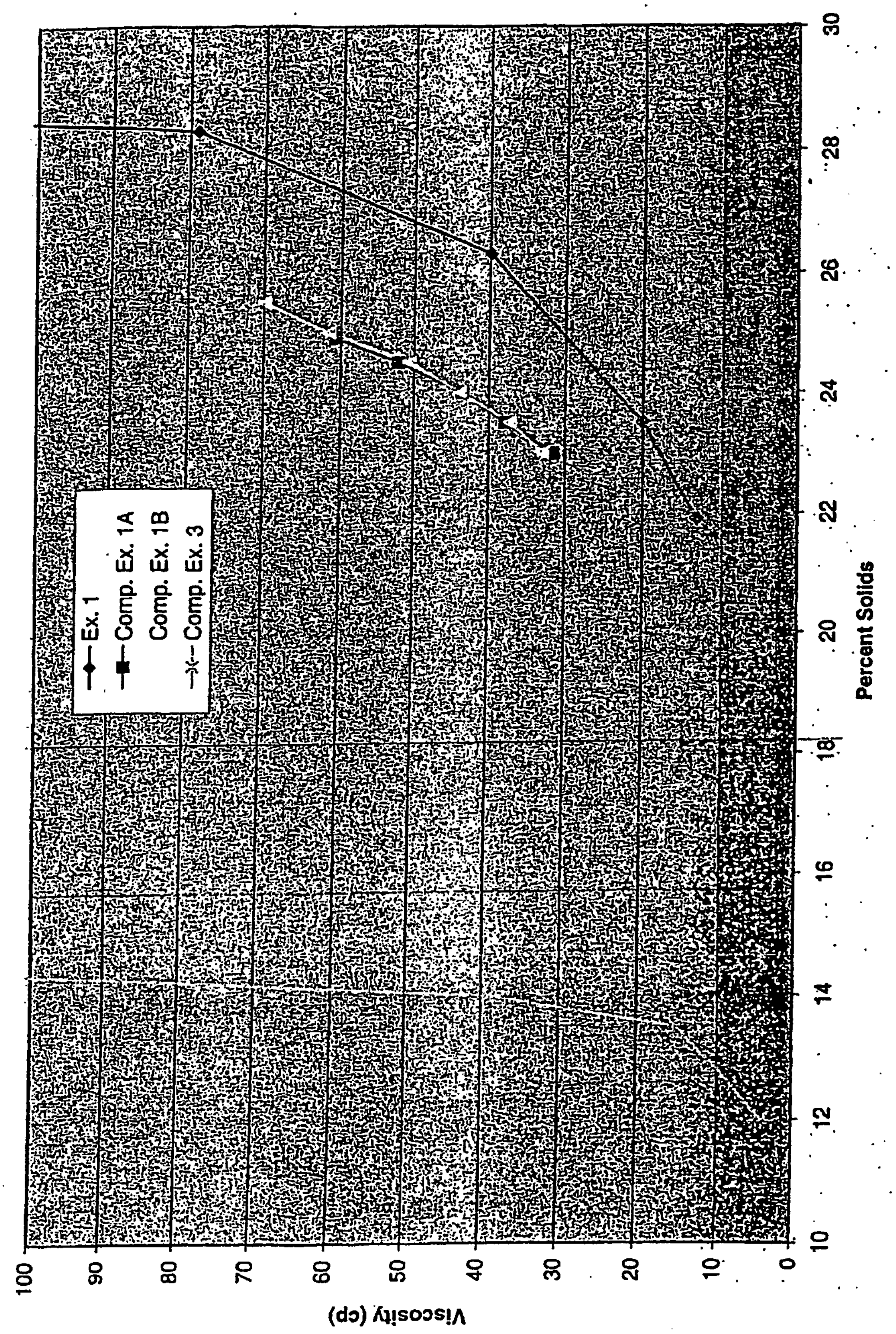
Viscosity (cp)
100
90
80
70
60
50
40
30
20
10
0
Percent Solids
10
12
14
16
18
20
22
24
26
28
30
Ex. 1
Comp. Ex. 1A
Comp. Ex. 1B
Comp. Ex. 3

Figure 1

Figure 2

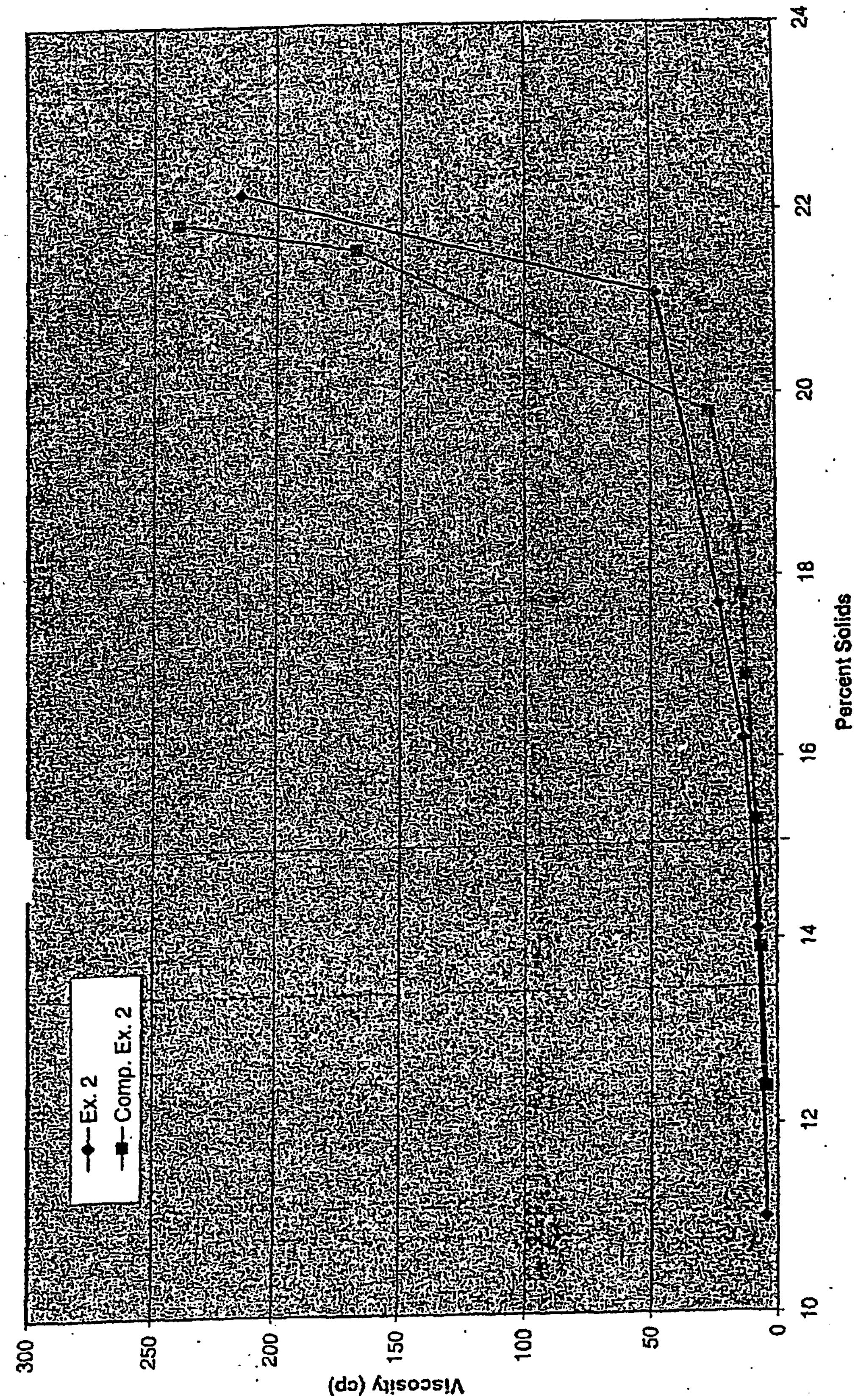
Ex. 2
Comp. Ex. 2
Viscosity (cp)
Percent Solids
300
250
200
150
100
50
0
10
12
14
16
18
20
22
24

Figure 3

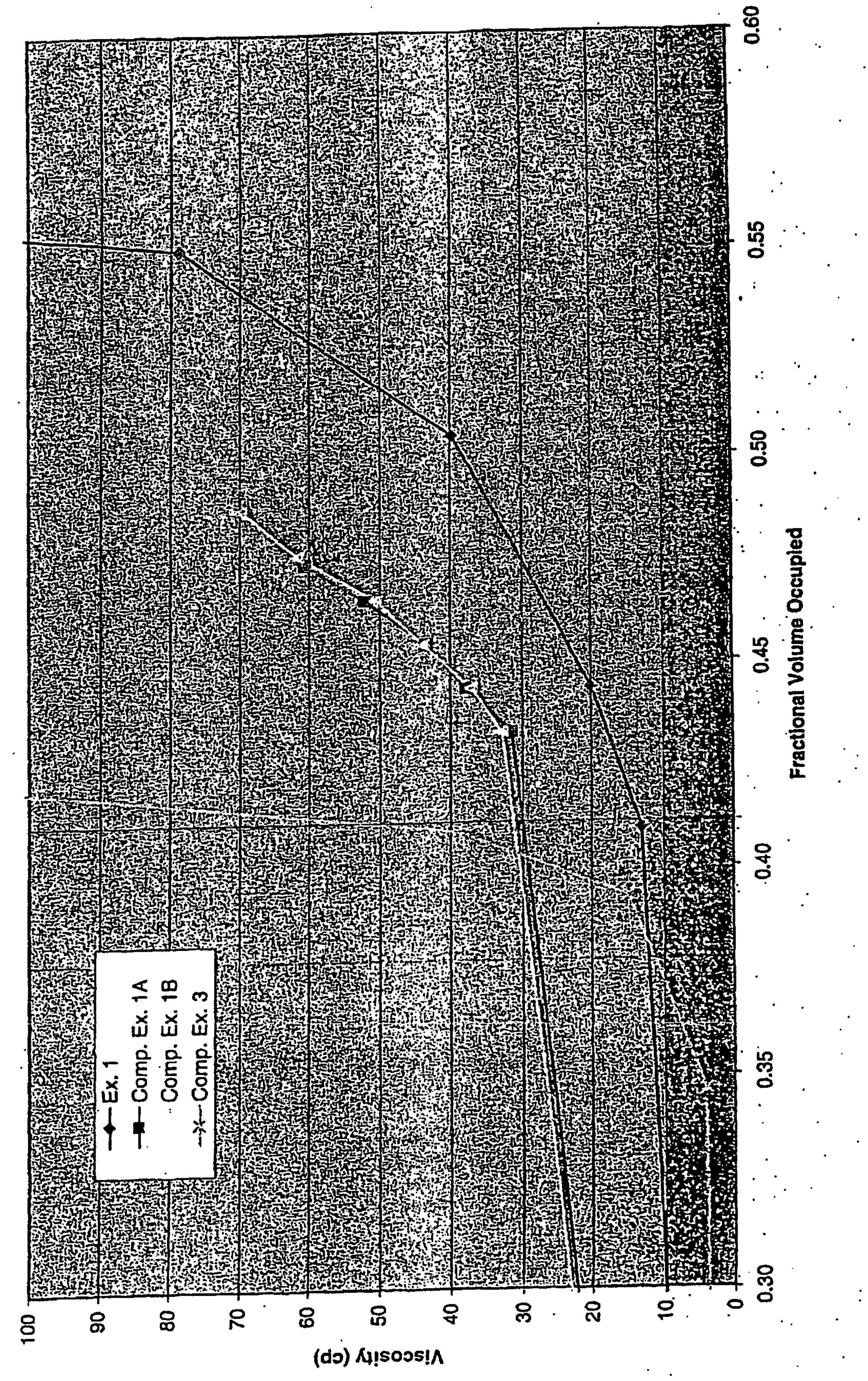
Viscosity (cp)
100
90
80
70
60
50
40
30
20
10
0
0.30
0.35
0.40
0.45
0.50
0.55
0.60
Fractional Volume Occupied
Ex. 1
Comp. Ex. 1A
Comp. Ex. 1B
Comp. Ex. 3

Figure 4

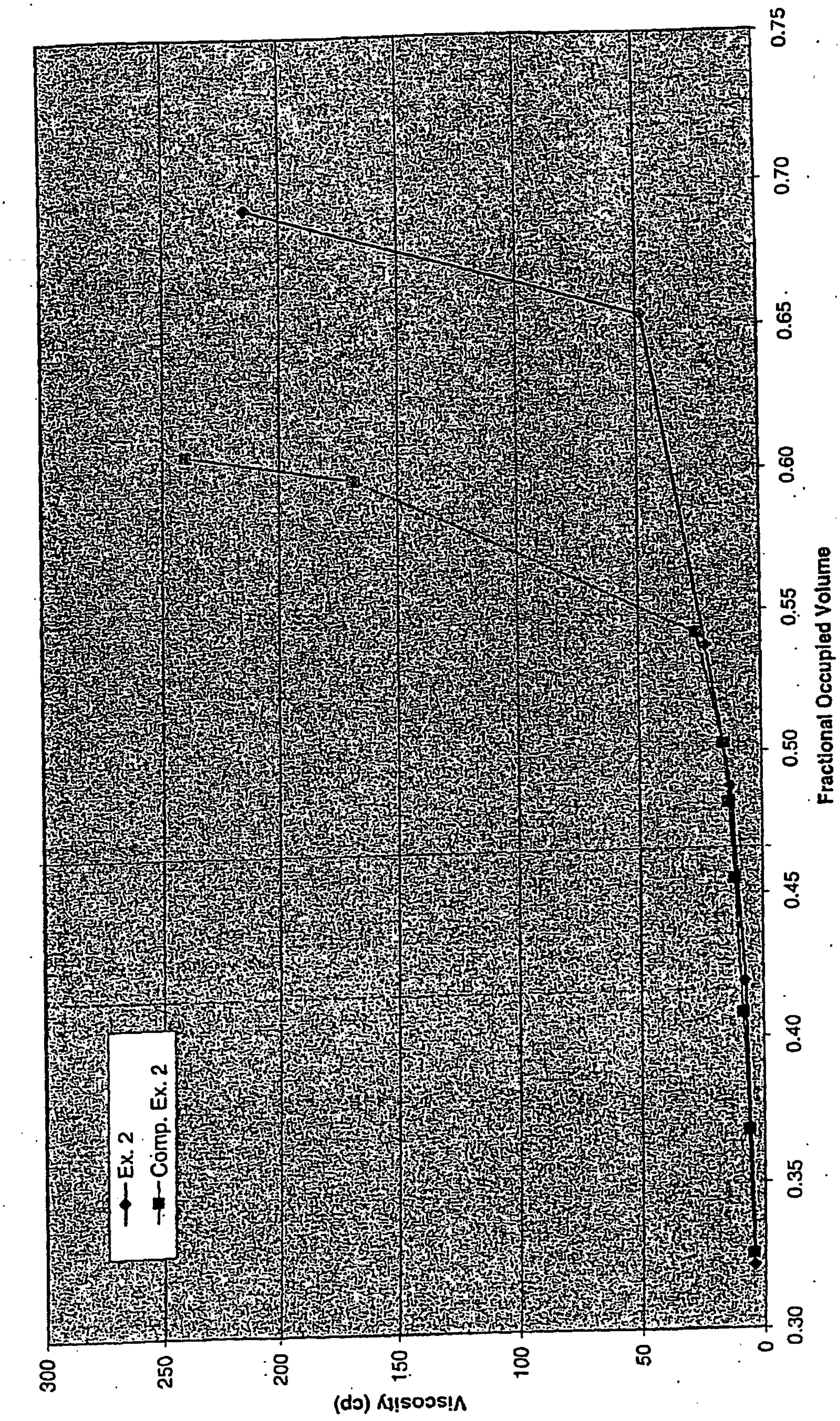
Ex. 2
Comp. Ex. 2
Viscosity (cp)
300
250
200
150
100
50
0
0.30
0.35
0.40
0.45
0.50
0.55
0.60
0.65
0.70
0.75
Fractional Occupied Volume

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CA 609186
- CA 609190
- US 3012973 A
- US 4954220 A
- EP 468070 A
- US 5030286 A
- EP 803374 A
- WO 878476 A
- US 4983369 A
- US 5277888 A
- US 2731326 A
- US 2741600 A
- US 3607774 A
- US 3591518 A
- WO 9722670 A
- DE 19534327, Koch
- US 5720806 A, Tokuyama
- US 2892797 A, Alexander
- US 6420456 B1
- US 6312861 B1
- US 6214106 B1
- US 6096469 B1
- US 4877451 B1
- US 5376172 B1
- US RE30450 B1
- US 4263051 B1
- US 6415996 B1, Adair
- US 20010042493 A1, Degussa
- DE 9534327 A1
- US 20020040661 A1
- US 6420039 B1, Cabot
- US 5472473 A, Cabot
- US 6380265 B
- US 4157920 A
- DE 762723
- US 6380285 B


### Non-patent literature cited in the description


- *Chemistry of Silica,* 1979, 328-330